# FASCICULE DE BREVET EUROPEEN

(11) **EP 2 383 490 B1**
(45) Date de publication et mention de la délivrance du brevet: **06.03.2013**
(21) Numéro de dépôt: 11163966.2
(22) Date de dépôt: 27.04.2011
(51) Int. Cl.: F16F 15/121, F16H 55/36, F16F 15/12

(54) **Poulie de découplage**
Entkupplungsriemenscheibe
Uncoupling pulley

(30) Priorité: 30.04.2010 FR 1001859
(43) Date de publication de la demande: 02.11.2011
(73) Titulaire: Hutchinson, 75008 Paris (FR)
(72) Inventeur: Varin, Hervé, 37300, Joué-lès-Tours (FR); Champalou, François, 41150, Chaumont sur Loire (FR); Soria, Olivier, 41150 Rilly sur Loire (FR)
(74) Mandataire: Reboussin, Yohann Mickaël Noël

(56) Documents cités:
- US-A1- 2006 264 280
- US-A1- 2008 108 442

## Description

La présente invention a pour objet une poulie de découplage utilisable dans un système de transmission par courroie pour atténuer les variations de tension de courroie grâce à la déformation d'un composant élastique interposé entre une partie menante qui fournit de l'énergie mécanique et une partie menée.

Dans le cas par exemple d'une poulie d'alternateur, la jante de la poulie (partie menante) est entraînée par la courroie et le moyeu de la poulie qui est solidaire de l'alternateur (partie menée). La fonction élastique de filtrage (filtre passe-bas) est généralement assurée par un corps en élastomère.

Pour les systèmes de transmission fortement acycliques (irrégularités du moteur importantes) ou pour les systèmes dont le cycle d'utilisation est très sollicitant (alterno-démarreur par exemple), les phénomènes vibratoires sont tels que le corps de filtrage en caoutchouc ne permet pas en général d'assurer un compromis satisfaisant entre durée de vie et performances en filtrage. Effectivement, afin de filtrer correctement, les raideurs de torsion du corps en élastomère doivent être faibles alors que dans le même temps, le corps en élastomère ne doit pas trop se déformer si l'on souhaite augmenter sa durée de vie. On aboutit donc très souvent à des durées de vie limitées avec des performances de filtrage moyennes.

On connaît des poulies de découplage dont la raideur élastique nécessaire au filtrage est assurée par un ressort de torsion. Des poulies de découplage destinées à des accessoires d'automobile (alternateur) sont décrites notamment dans les Demandes de Brevet US 2006/264280, US 2008/108442 et WO 2009/47816. Le document US 2008/108442 montre une poulie de découplage selon le préambule de la revendication 1.

Ces poulies assurent un couplage et un découplage du ressort par un système à friction qui impose de faire travailler le ressort en ouverture, et qui imposent obligatoirement la mise en oeuvre d'un mode de fonctionnement découplé incompatible avec certaines applications, notamment les poulies d'alterno-démarreur (ADS).

Le système de couplage/découplage à friction est source de frottement, donc d'usure, ce qui affecte la stabilité des performances dans le temps, ainsi que la fiabilité et la longévité du produit.

De même, il est peu favorable de faire travailler un ressort alternativement en ouverture et en fermeture pour assurer un couplage et un découplage, à savoir un embrayage et un débrayage.

La présente invention propose d'éviter ces inconvénients en supprimant tout système de couplage/découplage à friction et en prévoyant une cinématique ne faisant travailler le ressort qu'en fermeture.

L'invention concerne ainsi une poulie de découplage comportant une jante solidaire d'un premier élément de transmission de puissance, ainsi qu'un ressort de torsion monté dans un réceptacle solidaire d'un deuxième élément de transmission de puissance, l'un des éléments de transmission de puissance étant menant et l'autre des éléments de transmission de puissance étant mené, caractérisée en ce que le réceptacle est une cloche à l'intérieur de laquelle est centré le ressort lequel présente une première et une deuxième région d'extrémité dont chacune s'appuie sur une face d'appui de la cloche, en ce que la jante présente au moins une première butée d'entraînement ayant une première face coopérant avec la première région d'extrémité du ressort pour entraîner celui-ci dans le sens de la fermeture dans un premier sens de rotation relatif entre la jante et la cloche, et en ce que la cloche comporte au moins une première butée de cloche dont la position angulaire définit une première valeur maximale donnée α₁ pour le débattement de la première région d'extrémité du ressort entraînée à la fermeture par ladite première butée d'entraînement.

Un ressort de torsion est un ressort présentant plusieurs spires enroulées avec un pas axial (par exemple ressort hélicoïdal ou conique).

Selon une première variante, la poulie peut être caractérisée en ce que seule ladite première région d'extrémité coopère par ladite première face de ladite première butée d'entraînement, de sorte que la deuxième région d'extrémité du ressort reste en appui sur sa face d'appui.

Elle peut alors être caractérisée en ce que, pour le deuxième sens de rotation relatif entre la jante et la cloche opposé audit premier sens de rotation, le pourtour de la cloche présente un secteur angulaire de rotation libre pour la première butée d'entraînement sur un débattement angulaire α₄ entre la première extrémité du ressort jusqu'à une deuxième butée de cloche.

De préférence, la deuxième région d'extrémité de ressort est dégagée du secteur angulaire pour permettre le passage de la première butée d'entraînement jusqu'à ladite deuxième butée de cloche

Selon une deuxième variante, la poulie est caractérisée en ce que ladite première région d'extrémité ainsi que ladite deuxième région d'extrémité coopèrent alternativement selon ledit sens de rotation relatif avec ladite première butée d'entraînement pour entraîner le ressort à la fermeture, et en ce que la cloche présente une troisième butée de cloche dont la position angulaire définit une deuxième valeur maximale donnée α₂ pour le débattement de la deuxième région d'extrémité du ressort entraîné à la fermeture par une deuxième face de la première butée d'entraînement, opposée à la première face.

La cloche présente avantageusement un secteur angulaire α₃ de rotation à couple constant pour la première butée d'entraînement entre la première et la deuxième extrémité du ressort.

Un secteur angulaire de rotation à couple constant peut fonctionner en rotation libre ou comporter un élément de friction pour exercer un couple de freinage.

Selon une troisième variante, la poulie est caractérisée en ce que le ressort présente une dite première région d'extrémité coopérant avec ladite première face de ladite première butée d'entraînement et une dite deuxième région d'extrémité coopérant avec une première face de la deuxième butée d'entraînement pour entraîner le ressort dans le sens de la fermeture dans un deuxième sens de rotation opposé au premier sens de rotation, et en ce que la cloche présente une dite troisième butée de cloche dont la position angulaire définit une deuxième valeur maximale donnée α₂ pour le débattement de la deuxième région d'extrémité du ressort entraîné à la fermeture par la deuxième butée d'entraînement.

La poulie peut être caractérisée en ce que la cloche présente une quatrième et une cinquième butée de cloche autorisant respectivement un dit débattement angulaire α₁ pour la deuxième butée d'entraînement lorsque la première extrémité du ressort est entraînée à la fermeture par la première face de la première butée d'entraînement et un dit débattement angulaire α₂ pour la première butée d'entraînement lorsque la deuxième extrémité du ressort est entraînée à la fermeture par la première face de la deuxième butée d'entraînement.

L'angle α₁ peut être ou non égal à l'angle α₂.

La poulie peut être caractérisée en ce qu'au moins une dite butée de cloche présente une face coopérant avec une dite face d'une dite butée d'entraînement pour définir une dite valeur maximale donnée α₁ et/ou α₂, Au moins une dite face de butée de cloche peut comporter au moins un élément amortisseur, par exemple un élément élastique.

La poulie peut être caractérisée en ce qu'au moins une dite butée de cloche présente une face coopérant avec une dite face d'une région d'extrémité du ressort pour définir une dite valeur maximale donnée α₁ et/ou α₂.

La poulie peut comporter un élément de friction introduisant un couple de contact entre le premier et le deuxième élément de transmission de puissance.

Ladite première et/ou deuxième région d'extrémité peut être en contact avec ladite face d'appui de la cloche.

Alternativement, la poulie peut être caractérisée en ce qu'elle comporte une pièce annulaire centrée sur la cloche et qui présente un logement qui reçoit la première région d'extrémité du ressort, ce logement ayant au moins une face de contact, qui est en contact avec la dite face d'appui de la cloche.

La pièce annulaire peut être en un matériau non métallique atténuant les bruits dus aux chocs, tel que le polyamide ou le polyuréthane, ou bien elle peut présenter au moins une face de contact revêtue d'un matériau amortisseur de chocs tel qu'un élastomère ou un matériau thermoplastique élastomérique.

La poulie peut être une poulie d'accessoire automobile par exemple pour un alternateur dans laquelle c'est le premier élément de transmission de puissance qui est menant, et comporte une denture pour recevoir la denture d'une courroie de type K et en ce que le deuxième élément de transmission de puissance présente un élément de couplage à un dit accessoire.

La poulie peut être une poulie de vilebrequin dans laquelle le deuxième élément de transmission est menant, le deuxième élément comportant un élément de couplage à un vilebrequin, et le premier élément comportant une denture pour recevoir la denture d'une courroie de type K.

La poulie peut être une poulie d'alterno-démarreur pour laquelle le premier élément de transmission peut être menant ou mené selon le mode de fonctionnement (démarrage ou démarré).

D'autres caractéristiques et avantages de l'invention apparaîtront mieux à la lecture de la description qui va suivre, donnée à titre d'exemple non limitatif, en liaison avec les dessins dans lesquels :
- les figures1a à 1g illustrent une première variante de l'invention dans laquelle une seule butée d'entraînement coopère avec une seule région d'extrémité du ressort, avec deux vues en perspective de la poulie (1a et 1d) ,une vue du ressort (1b), et deux vues de face de la poulie (1c et 1e), lés figures 1f et 1g étant des caractéristiques de couple (en N.m) en fonction de l'angle (degrés) ;
- les figures 2a à 2g illustrent une deuxième variante de l'invention dans laquelle une seule butée d'entraînement coopère alternativement avec l'une ou l'autre région d'extrémité du ressort, avec trois vues en perspective de la poulie (2a, 2c, 2d), deux vues de face de la poulie (2b), alors que les figures 2f et 2g sont des caractéristiques de couple (en N.m) en fonction de l'angle (en degrés) ;
- les figures suivantes (3a à 3e ; 4a, 4b ; 5a à 5e) illustrent d'autres variantes de l'invention dans laquelle deux butées d'entraînement coopèrent en alternance avec l'une ou l'autre des deux régions d'extrémité du ressort, à savoir :
- les figures 3a à 3e sont relatives à une poulie d'accessoire, en l'occurrence une poulie d'alternateur, avec un schéma de principe (3a), une vue de la poulie en coupe axiale (3b), une vue en perspective de la poulie avec enlèvement partiel (3c), un éclaté (3d) et un détail en coupe d'une variante permettant l'ajout d'un couple résistant constant ;
- les figures 4a et 4b sont relatives à une poulie de vilebrequin;
- les figures 5a à 5e sont relatives à une poulie d'alterno-démarreur (« ADS »);
- les figures 6a à 6e représentent des variantes de ressorts.
- les figures 7a à 7c représentent une variante de l'invention dans laquelle la fonction d'amortissement de bruit est réalisée à l'aide d'une pièce annulaire dans laquelle est logée l'extrémité du ressort qui est sollicité à la fermeture.
- et la figure 8 illustre une variante de réalisation de l'extrémité du ressort lorsqu'elle est logée dans la cloche.

On notera que dans la mesure du possible, les mêmes signes de référence ont été conservés pour les éléments homologues des différentes variations.

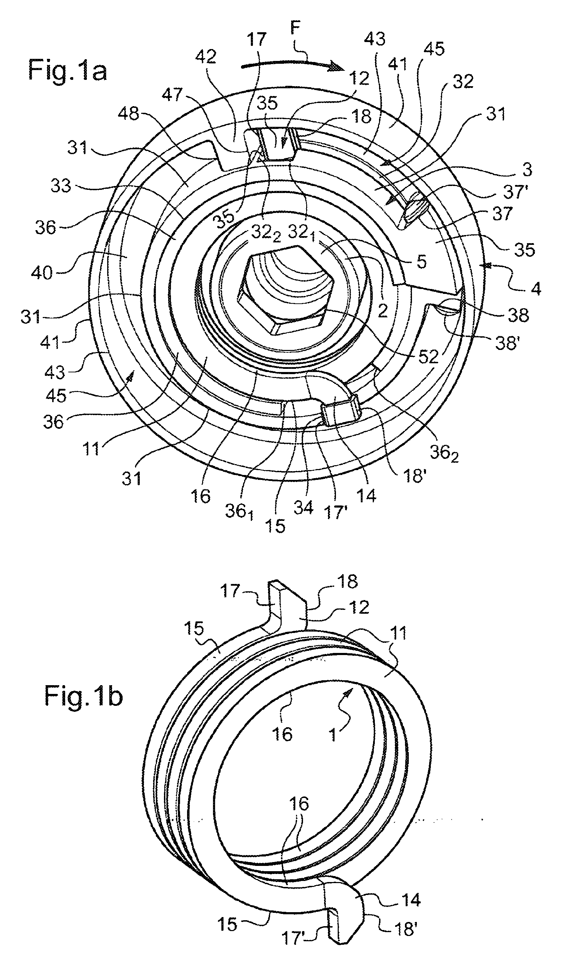

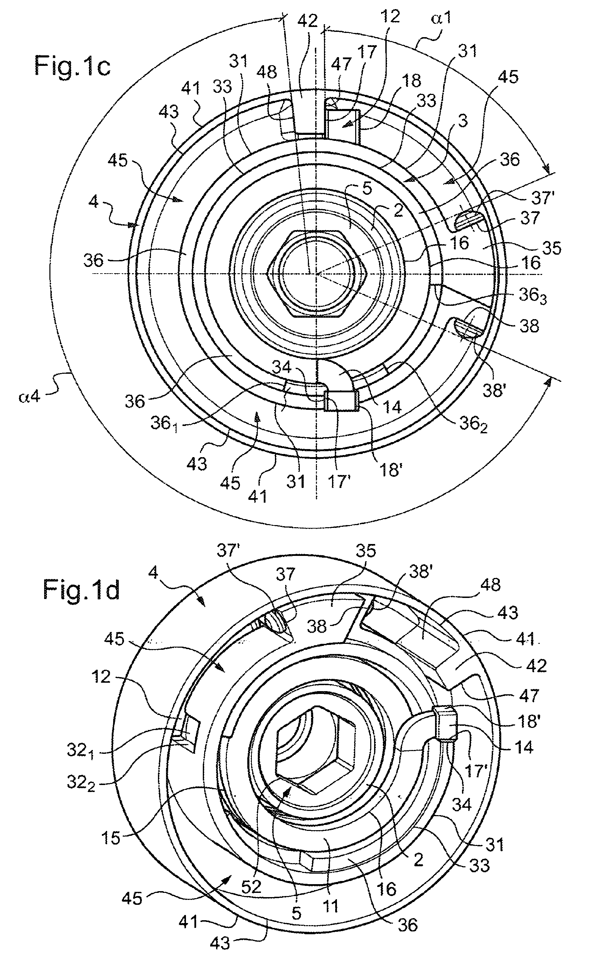

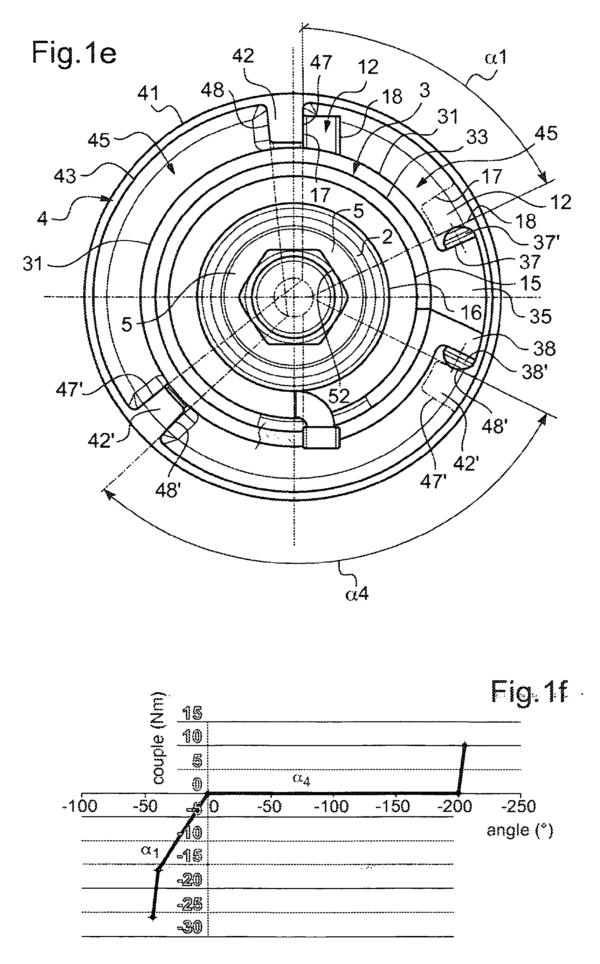

Aux figures 1a à 1d, la poulie de découplage comporte un ressort torsion (par exemple ressort hélicoïdal ou conique) 1 (figure 1b) comprenant par exemple des spires rectangulaires 11 ou circulaires. Deux régions d'extrémité recourbées 12 et 14 (figure 1b) permettent un entraînement à la fermeture du ressort 1 par leur face 17, 17' qui est adjacente au bord externe 15 des spires 11. L'autre face 18, 18' qui est adjacente au bord interne 16 des spires 11, qui servirait à entraîner le ressort 11 dans le sens de l'ouverture ne sont pas utilisés dans le cadre de la présente invention pour entraîner le ressort 1, mais peuvent servir de butée pour limiter le mouvement angulaire du ressort 1 entraîné à la fermeture.

Le ressort 1 est centré à l'intérieur d'une cloche 3 dans laquelle ses régions d'extrémités 12 et 14 sont en contact avec dés butées de cloche 32₂ et 34. La région d'extrémité 12 présente une extrémité 19 qui dépasse radialement du contour cylindrique externe 31 de la cloche 3 pour permettre un entraînement à la fermeture du ressort 1 par la face 17. La région d'extrémité 14, par contre, ne dépasse pas (ou pratiquement pas) radialement du contour cylindrique externe 31 de la cloche 3.

Une région cylindrique 2 de la cloche 3 permet un montage axial en force de la cloche 3 sur le moyeu 5.

Deux paliers 101 et 102, assurent la rotation relative et le maintien axial de la jante 4 et du moyeu 5. La jante 4 peut présenter un prolongement cylindrique 6 comportant une denture de poulie 61 pour recevoir une courroie striée (courroie automobile de type K)

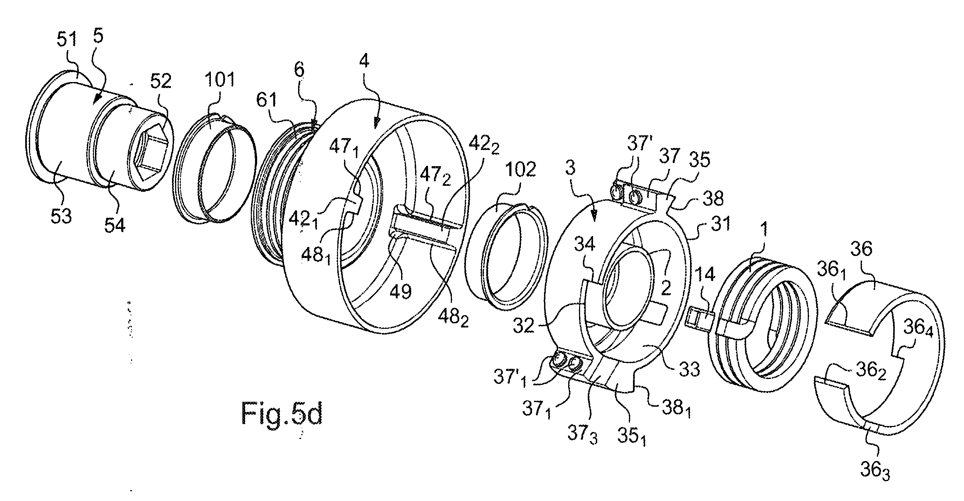

Le centrage du ressort 1 ,par son bord externe 15, dans la cloche 3 peut s'effectuer directement par le contour interne 33 de la cloche 3, ou bien comme représenté par une bague de centrage 36 fendue (extrémités 36₁ et 36₂) qui est visible aussi dans la vue éclatée de la figure 5d. Elle est disposée entre le ressort 1 et la cloche 3 pour faciliter le montage du ressort.

La face 17 est en contact avec la butée 32₂ et la face 17' est en contact avec la butée 34, ces deux butées étant espacées angulairement d'un angle qui permet préférentiellement une légère pré-contrainte (par exemple de l'ordre de 1° à 5°) du ressort 1 dans le sens de la fermeture, ce qui permet au ressort de ne jamais passer par sa position à vide et non précontrainte et d'osciller à partir de cette pré-torsion dans le sens de la fermeture.

Une jante 4 coaxiale à la cloche 3 entoure celle-ci. Elle présente un fond 40, un contour cylindrique externe 41 et un contour cylindrique interne 43, à partir duquel dépasse vers l'intérieur un doigt de butée 42 qui présente deux faces opposées 47 et 48.

Une lumière 32 qui présente éventuellement une région amont élargie 32₁ pourvue d'une butée 32₂ pour l'extrémité 12 du ressort 1, permet un déplacement angulaire de la région d'extrémité 19 d'un angle α₁ jusqu'à ce que la face 47 vienne en contact avec une butée de cloche 37. Il est en effet plus favorable que cet effet de mise en butée soit obtenu par la face 47 du doigt de butée 42 plutôt que par la face 18 de l'extrémité 12.

Cette butée de cloche est ménagée sur une face 37 d'un secteur circulaire 35 de la cloche 3 qui déborde de son contour cylindrique externe 31. La face 37 peut présenter au moins un élément élastique 37'. Une autre face 38 du secteur circulaire 35 forme une autre butée de cloche dont la fonction sera explicitée plus loin, et qui peut présenter au moins un élément élastique 38'.

Le ressort 1 peut être imprégné de graisse pour diminuer les frottements. Alternativement, un centreur tel que 36 peut être logé à l'extérieur du ressort 1 pour permettre au ressort 1 de travailler toujours dans la même position radiale et réduire les frottements. Le centreur 36 est lié en rotation à la cloche 3 par exemple par un pion ou un doigt.

Un moyeu 5 est solidaire en rotation de l'ensemble constitué par le ressort 1 et la cloche 3, et le cas échéant la bague de centrage 36.

La jante 4 peut être un élément menant (par exemple poulie d'accessoire), l'élément mené étant alors le moyeu 5, ou bien un élément mené (par exemple poulie de vilebrequin), l'élément menant étant alors le moyeu 5. Dans le cas d'une poulie d'alterno-démarreur, en mode de démarrage du moteur du véhicule automobile, le moyeu 5 est menant, et en mode démarré, c'est la jante 4 qui est menante.

Le fonctionnement est le suivant : à partir de la position de repos (figure la), une vitesse relative de la jante 4 plus élevée que celle du moyeu 5 dans le sens de la flèche F qui est également le sens de rotation du moteur, met en contact la face 47 de la butée 42 avec la face 17 de l'extrémité 12, en l'entraînant en rotation le long de la lumière 32, ce qui entraîne le ressort de torsion 1 dans le sens de la fermeture, alors que la face 17' reste en contact avec la butée 34. Ce mouvement rotatif peut se poursuivre jusqu'à ce que la butée 37 soit atteinte, de préférence par la face 47 de la butée 42 qui déborde latéralement de la face 17, ce qui correspond à une amplitude angulaire maximale α₁ (figure 1c). L'extrémité 12 qui circule dans la lumière 32 s'efface derrière le secteur circulaire 35.

Si au contraire, la vitesse angulaire de la jante 4 est inférieure à celle du moyeu 5, alors, la butée 42 de la jante 4 peut se déplacer librement dans un secteur circulaire 45 qui existe entre le contour cylindrique extérieur 31 de la cloche et le contour cylindrique intérieur 43 de la jante. Le secteur circulaire 45 a la forme d'un secteur de cylindre. Ce mouvement contra-rotatif peut se poursuivre jusqu'à ce que la butée 38 soit atteinte par la face 48 du doigt de butée 42, ce qui correspond à une amplitude angulaire maximale α₄ (figure 1c). C'est pour augmenter au maximum la valeur de l'angle α₄ que l'extrémité 14 du ressort 1 ne dépasse pas (ou peu) du contour externe 31 de la cloche 3 pour laisser libre passage au doigt 42 de la jante 4. Il est bien entendu possible de choisir α₄ pour que ce dépassement de l'extrémité 14 ne se produise pas, en disposant une butée 38 supplémentaire sur un autre secteur circulaire débordant du contour externe 31 de la cloche 3, ou bien, comme représenté à la figure le, en disposant sur la jante 4 le doigt de butée supplémentaire 42' présentant des faces latérales opposées 47' et 48'. Ce doigt de butée 42' est espacé du doigt de butée 42 d'une distance angulaire choisie en fonction de la valeur désirée de α₄. Cette valeur α₄ correspond au débattement du doigt de butée 42' entre la position de repos représentée à la figure 1c et la venue de la face 48' en butée sur la butée 38 (position représentée en pointillés à la figure 1c). Il est également possible d'annuler α₄.

La solution préférée (figure 1a à 1c) est cependant de prévoir une valeur maximale de α₄ pour bénéficier de la rotation du doigt de butée 42 dans le secteur cylindrique 45 et de la jante 4. Cette rotation s'effectue à couple constant, à savoir, soit à couple nul (aux frottements résiduels près), soit à couple de valeur donnée, en prévoyant un élément de friction, par exemple entre la jante 4 et le moyeu 5.

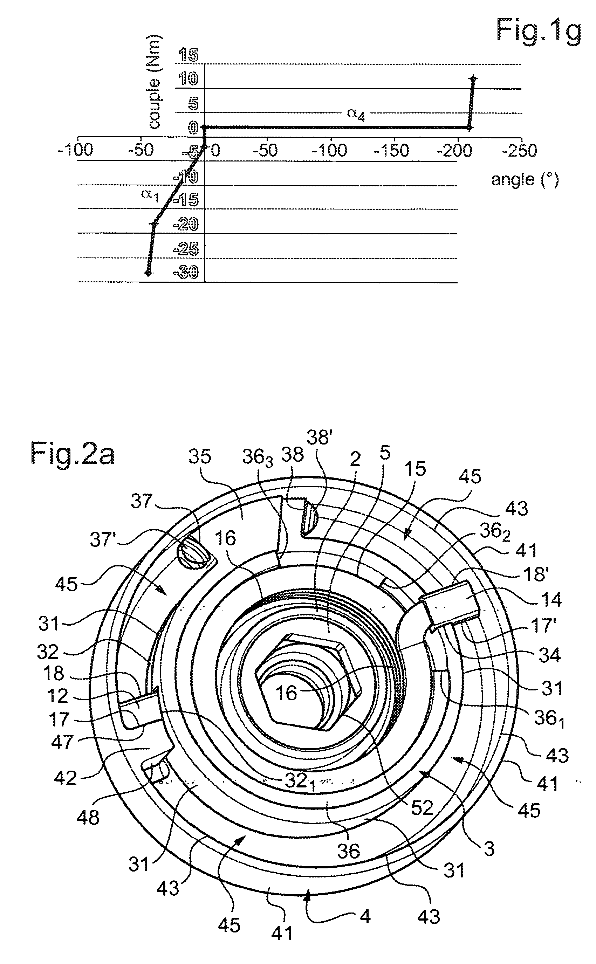

Les figures 1f et 1g montrent les caractéristiques de la poulie décrite ci-dessus. A la figure 1f (couple nul), on a en mode dit décélération un couple nul jusqu'à α₄ = 200°, et dans le sens dit accélération, un couple croissant donné par le ressort 1 jusqu'à α₁ = -40°. Au-delà de ces valeurs, on voit le couple élevé induit par les butées élastiques 37' et 38'. La figure 1g représente la caractéristique, lorsqu'un couple de friction est ajouté, ce qui produit un décalage constant de la caractéristique dans un sens de rotation relatif comme dans l'autre.

La variante décrite ci-dessus présente donc deux modes :
- Un mode d'accélération de la jante 4 par rapport au moyeu 5 qui est découplé par le ressort 1 jusqu'à mise en butée en 37 ;
- Un mode de décélération relative de la jante 4 par rapport au moyeu 5, qui est découplé par la rotation à couple constant d'amplitude α₄ du doigt de butée 42 dans le secteur cylindrique 45, jusqu'à mise en butée en 38. On notera que α₄ peut être nul, notamment pour une poulie d'alterno-démarreur.

Les éléments élastiques 37' et 38', par exemple en élastomère, servent à amortir la mise en butée en fin de course.

Comme le doigt de butée 42 est disposé de sorte que seule sa face 47 puisse venir en contact avec l'extrémité 12 du ressort 1 pour commander celui-ci à la fermeture par la face latérale 17, le fonctionnement est indifférent au fait que la jante 4 ou le moyeu 5 soit l'élément menant (ou l'élément mené).

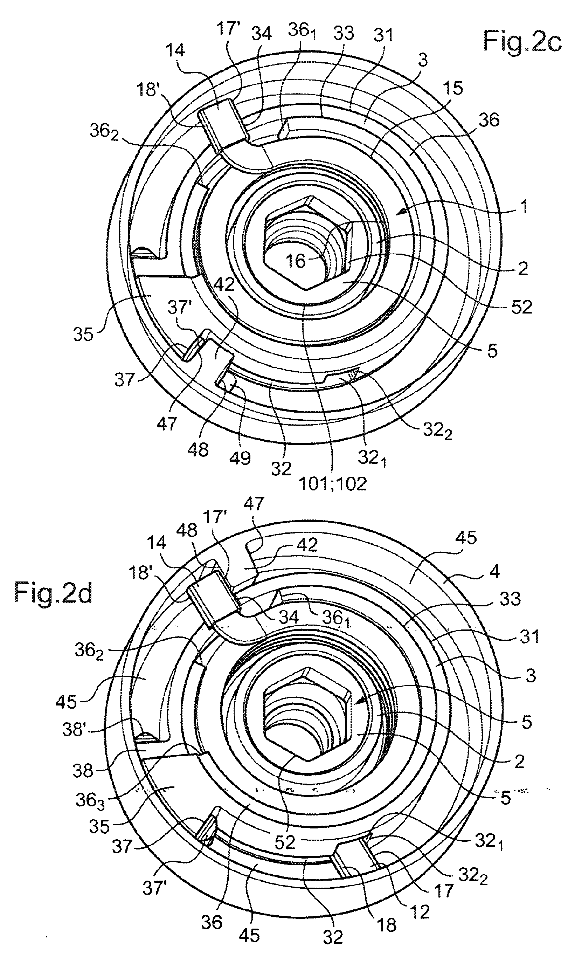

Les figures 2a à 2c sont relatives à une autre variante dans laquelle le doigt de butée 42 commande le ressort 1 à la fermeture alternativement à partir de l'une ou l'autre de ses extrémités 12 et 14, qui au repos sont en butée en 32₂ et en 34.

Dans ce mode de réalisation, à partir d'une position de repos représentée à la figure 2a, la butée de cloche 42 peut entraîner le ressort 1 dans le sens de la fermeture soit par sa face 47 qui vient en contact avec la face 17 de l'extrémité 12 (comme dans la variante précédente), soit par sa face opposée 48 qui vient en contact avec la face 17' de l'extrémité 14 qui dépasse du contour externe 31. Le doigt de butée 42 se déplace angulairement entre les faces 17 et 17' des extrémités 12 et 14 du ressort 1 qui commandent celui-ci à la fermeture, de sorte que le fonctionnement dépend seulement de la vitesse relative de la jante 4 et du moyeu 5, quelque soit celui de ces deux éléments qui est menant, et est indifférent au sens de rotation de la poulie.

Le ressort 1 est entraîné en fermeture par son extrémité 12 avec une course angulaire maximale α₁ avant venue de la face 47 en butée en 37 (avec éventuellement un élément élastique 37'), ou par son extrémité 14 avec une course angulaire maximale α₂ avant venue en butée de sa face 48 en 38 (avec éventuellement un élément élastique 38'). Les valeurs α₁ et α₂ peuvent être égales (α₁ = α₂) ou bien différentes (α₁ ≠ α₂).

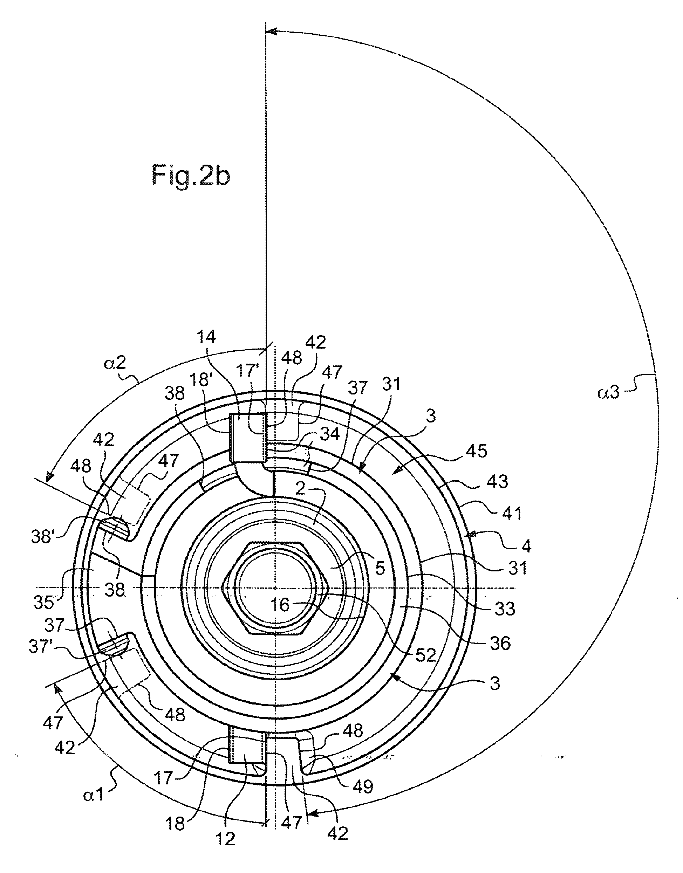

La figure 2b représente le doigt de butée 42 en ses quatre différentes positions caractéristiques, à savoir d'une part, une position de repos en traits pleins, d'autre part, en pointillés, une position de venue en butée en 37 de sa face 47 (course angulaire α₁), ensuite une position de contact entre sa face 48 et la face 47' de l'extrémité 14 du ressort (course α₃), et enfin, une position de mise en butée en 38 de sa face 48 (course α₂).

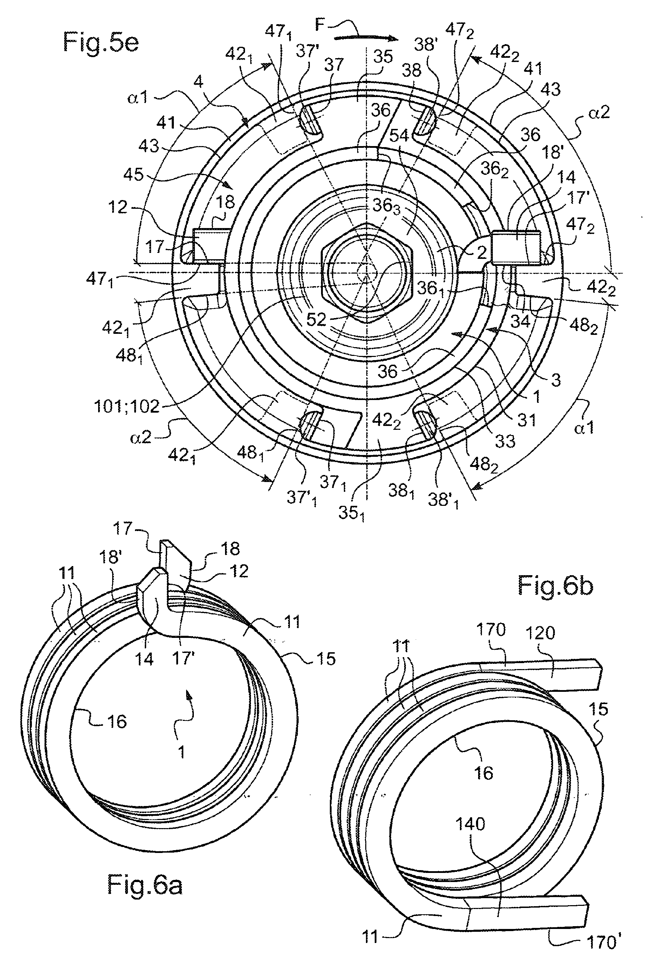

Entre les extrémités 12 et 14, il existe une course angulaire maximale α₃ qu'il est préférable de choisir la plus grande possible. Il est également possible de réduire la valeur de α₃, voire de l'annuler par exemple en jouant sur l'écart angulaire entre les extrémités 12 et 14 du ressort 1 (voir par exemple le ressort représenté à la figure 6a).

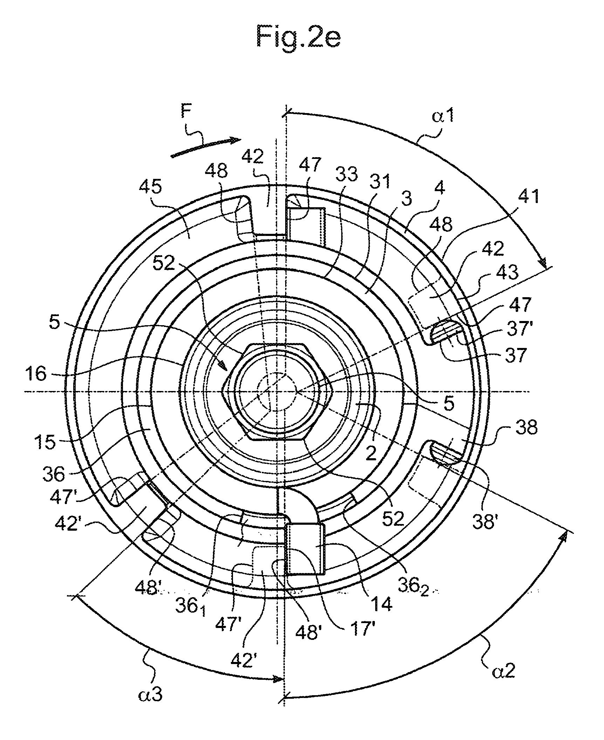

La figure 2e montre un mode de réalisation dans lequel la valeur de l'angle α₃ est réduite en raison de la présence d'un doigt de butée supplémentaire 42' espacé angulairement du doigt de butée 42.

Dans ce mode de réalisation, le doigt de butée 42 se déplace (flèche F) avec une amplitude angulaire α₁ entre une position de repos où il est représenté en traits pleins et une position de butée (face 47 en butée en 37) représentée en pointillés.

Lors de la décélération de la jante 4 par rapport au moyeu 5, le débattement angulaire α₃ du doigt de butée 42 est limité par la mise en contact de la face 48' du doigt de butée 42' avec la face 17' de l'extrémité 14 du ressort 1, après quoi le doigt de butée entraîne par sa face 48' l'extrémité 14 du ressort 1 vers la butée 38, 38', selon une course angulaire de valeur maximale α₂.

En d'autres termes, l'angle α₃ est limité par la présence d'un deuxième doigt de butée 42' espacé angulairement de l'extrémité 14 du ressort 1 pour obtenir l'angle α₃ désiré.

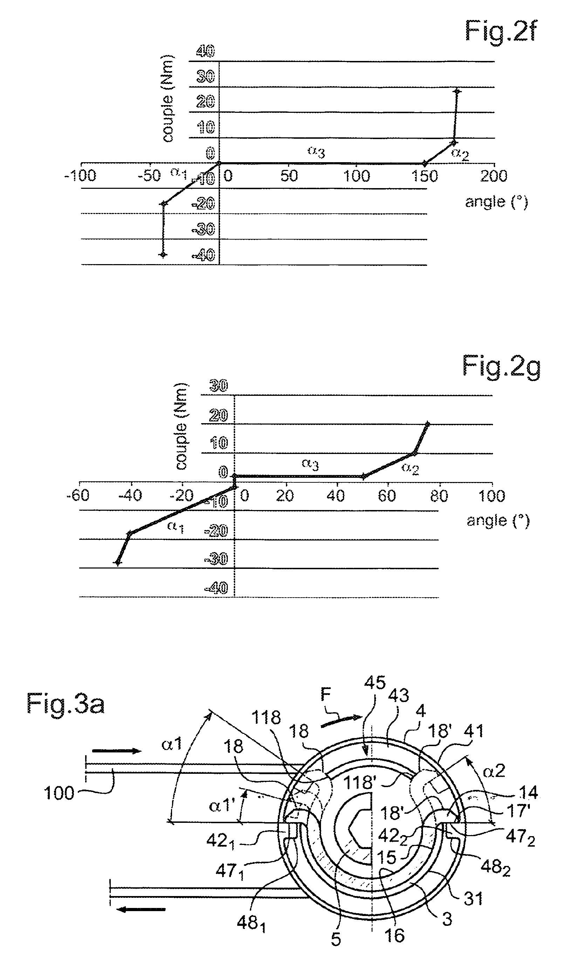

Les figures 2f et 2g montrent par exemple des caractéristiques de la poulie des figures 2a à 2c dans le cas où la zone de couple constant est à couple nul, c'est-à-dire limité aux frottements résiduels (figure 2f) ou bien avec un couple de valeur donné fourni par un élément de friction (figure 2g), qui produit un décalage constant de la caractéristique dans un sens de rotation comme dans l'autre. Dans cet exemple, α₁ = -40°, α₂ = 20° et α₃ = 150° pour la figure 2f, et α₃ = 50° pour la figure 2g.

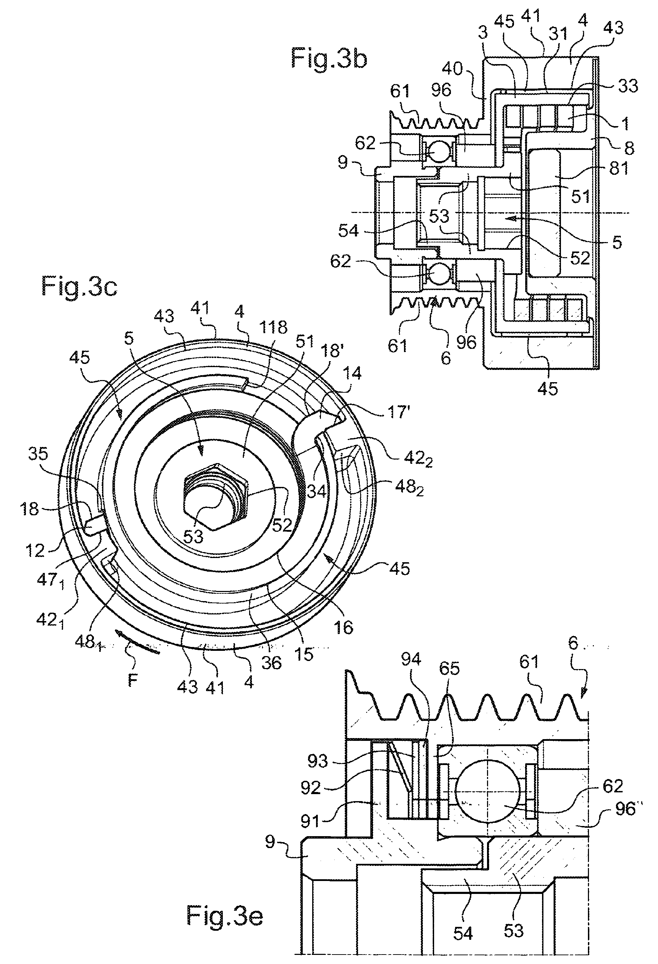

Les figures 3a à 3d représentent une variante dans laquelle seuls des débattements selon les angles α₁ et α₂ sont prévus (α₃ = 0) grâce à la mise en oeuvre de deux butées de jante 42₁ et 42₂ qui sont au contact en position montée avec les faces 17 et 17' des extrémités 12 et 14 du ressort 1 (figure 3a).

La poulie représentée à titre d'exemple est une poulie d'alternateur pour laquelle la jante 4 est l'élément menant, grâce à l'énergie motrice fournie par la courroie de transmission 100 et pour laquelle le moyeu 5 est l'élément mené qui entraîne l'alternateur (non représenté).

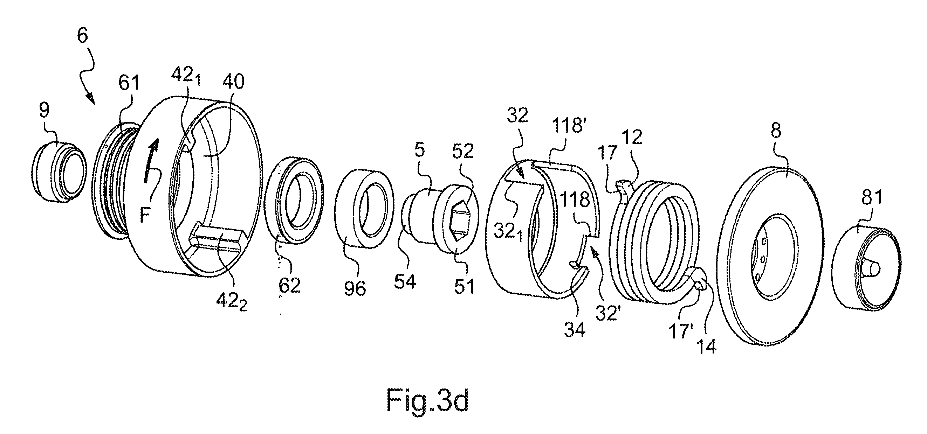

Selon la vue en coupe 3b, la vue en perspective 3c (avec enlèvement du couvercle 8) et la vue éclatée de la figure 3d, la poulie comporte :
- une jante 4 qui présente un fond 40, un contour externe cylindrique 41, un contour interne cylindrique 43, ainsi que deux doigts de butée 41₁ et 42₂ qui sont dans cet exemple diamétralement opposés ; cette jante 4 présente un prolongement cylindrique 6 de plus petit diamètre qui comporte une denture de poulie 61 pour recevoir une courroie striée (courroie automobile de type K) ;
- une cloche 3 dont le contour interne 33 sert à centrer le ressort 1. La cloche présente deux lumières 32 et 32' pour le parcours angulaire des extrémités 12 et 14 du ressort 1 ; les faces 18 et 18' des extrémités 12 et 14 viennent en butée sur les faces respectivement 118, 118' des lumières 32, 32' (figure 3d), et les butées 37 et 38 ne sont pas présentes (cette variante peut être mise en oeuvre pour chacun des modes de réalisation représentés)
- un moyeu 5 présentant une tête pourvue d'une ouverture 52 hexagonale en vue d'un serrage sur l'arbre d'un alternateur, et comportant une région cylindrique centrale 53, et une région cylindrique d'extrémité 54 de plus faible diamètre que la région centrale 53;
- un capot 8, pourvu d'un bouchon 81, qui vient s'emmancher à son pourtour dans un logement de la jante 4 ;
- un ensemble comprenant une pièce d'appui cylindrique 9 et une entretoise 96, la pièce d'appui cylindrique 9 étant emmanchée à force entre la périphérie de la région d'extrémité 54 et le contour interne d'un roulement 62, avec interposition d'une entretoise 96 (avec mise en compression du la rondelle Belleville 92).

La figure 3e illustre une variante dans laquelle un couple de friction constant est introduit entre la pièce 9 solidaire de l'arbre de l'alternateur (à travers le serrage successif de celle-ci sur le contour interne d'un roulement 63 et du moyeu 5, lui-même serré sur le contour interne du roulement 62) et le prolongement 65 de la jante 4. Un ensemble comprenant une rondelle Belleville 92, une rondelle 93 et une rondelle de friction 94 par exemple PTFE est pris en sandwich (avec mise en compression de la rondelle Belleville 92) entre un épaulement annulaire 91 de la pièce 9 et un épaulement annulaire 65 du prolongement 61.

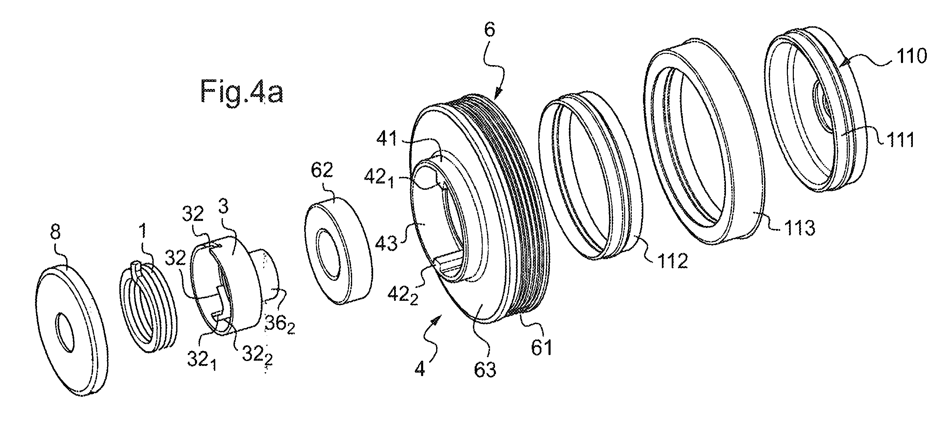

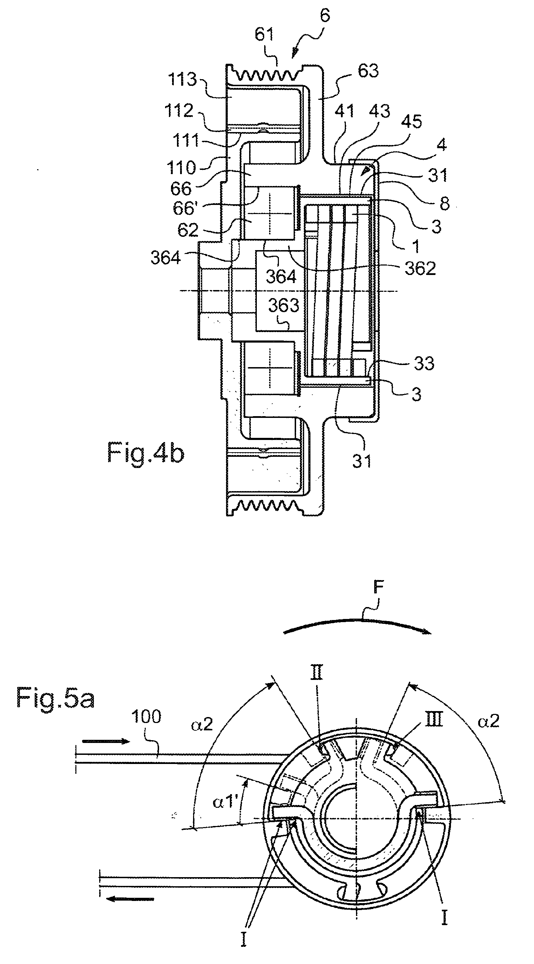

Les figures 4a et 4b représentent une autre variante, à savoir une poulie de vilebrequin dans laquelle seuls des débattements selon les angles α₁ et α₂ sont prévus. Le moyeu 5 est dans ce cas l'élément menant et la jante 4 est l'élément mené.

Il en va de même des figures 5a à 5g qui représentent une poulie d'alterno-démarreur (ADS), dans ce cas, la jante 4 et le moyeu 5 sont alternativement menant et mené selon que l'on est en mode démarreur ou en mode alternateur. En mode démarreur, le moyeu 5 est menant alors que c'est la jante 4 qui est menante en mode alternateur.

Ces exemples confirment que le concept de l'invention dépend des mouvements de rotation relatifs, mais est indépendant de la nature menante ou menée de la jante 4 ou du moyeu 5, et que dans le cas où les deux extrémités 12 et 14 du ressort 1 servent à le commander en fermeture, il y a en outre indépendance vis-à-vis du sens de rotation de l'élément menant.

La poulie de vilebrequin représentée aux figures 4a et 4b comporte :
- une jante 4 comportant un contour cylindrique externe 41, et un contour cylindrique interne 43 pourvu de deux doigts de butée 42₁ et 42₂, qui sont dans cet exemple diamétralement opposés ; cette jante présente une région cylindrique principale 6 de plus grand diamètre que le contour externe 41 et qui comporte une denture de poulie 61 pour recevoir une courroie striée (courroie automobile de type K). La jante 4 se prolonge à l'intérieur de la région principale 6 par un prolongement cylindrique 66 ;
- une cloche 3 dont le contour interne 33 sert directement au centrage du ressort 1. Il n'est pas non plus prévu de centreur interne tel que 36. La cloche 3 présente deux lumières 32 pour permettre le parcours angulaire des extrémités 32 et 34 du ressort 1.

Un roulement 62 est logé entre le contour externe 364 d'un prolongement cylindrique 362 de la cloche 3 et le contour interne 66' du prolongement cylindrique 66.

Le contour interne 363 du prolongement 362 a une forme par exemple cylindrique pour assurer le passage d'une vis de fixation permettant le couplage au vilebrequin.

Un capot 8 est emmanché sur le contour 41 de la jante.

A l'autre extrémité, un flasque 110 est monté centré sur le contour externe 364.

Son contour cylindrique externe III reçoit par emmanchement à force une pièce cylindrique 112 de type polymérique et une masse 113, ces deux pièces permettant d'assurer de manière connue un filtrage des vibrations hautes fréquences du vilebrequin (amortissement des vibrations de torsion AVT).

Les figures 5a à 5f concernent une poulie d'alterno-démarreur (système dit ADS).

Le moteur du véhicule tourne par exemple dans le sens de la flèche F. A la figure 5a, α₁ désigne alors l'angle de débattement dû au couple électrique de l'alternateur (jante menante).

A la figure 5a, α₂ désigne l'angle de débattement lorsque le moyeu 5 est menant (mode démarreur).

La position I dite de repos correspond à un double contact entre la jante et le ressort et entre la cloche et le ressort.

La position II correspond à un contact entre la jante 4 et le ressort 1 à la position de débattement angulaire maximal α₁.

La position III correspond à un contact entre la jante 4 et le ressort à la position de débattement angulaire maximal α₂.

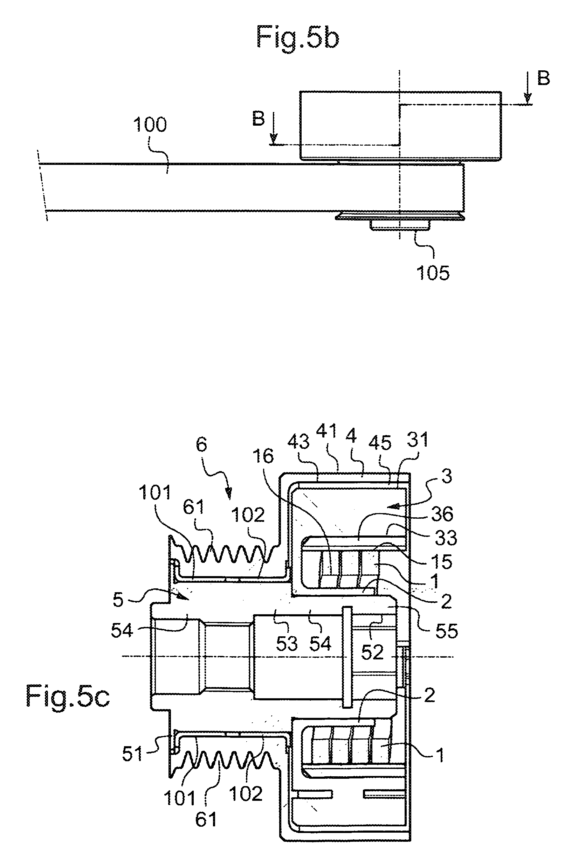

La figure 5b (vue de dessous) montre la courroie 100 montée près de la face 105 située côté alternateur (lorsque la poulie est montée).

Les figures 5c et 5d illustrent l'assemblage de la poulie. Dans ce mode de réalisation, on a prévu des butées de cloche supplémentaires (optionnelles) 35₁, 37₁, 38₁, dont la fonction sera explicitée ci-après.

Ce mode de réalisation permet un débattement selon les angles α₁ et α₂ seulement, la présence une zone à couple angulaire constant n'étant pas souhaitable dans cette application.

La poulie d'alterno-démarreur comporte (voir figures 5c et 5d) :
- une jante 4 comportant un contour cylindrique externe 41, un contour cylindrique interne 43 pourvu de deux doigts de butée 41₁ et 42₂, qui sont dans cet exemple diamétralement opposés ; cette jante 4 présente une région cylindrique 6 de plus petit diamètre que le contour cylindrique 41, et pourvu d'une denture 61 pour recevoir une courroie striée (courroie automobile de type K).
- une cloche 3 dont le contour interne 33 reçoit une bague fendue 36 dont les bords sont désignés par 36₁ et 36₂, et qui présente des lumières se terminant en 36₃ et 36₄ pour le passage des extrémités 12 et 14 du ressort 1 lors de leur rotation. La bague fendue 36 sert au centrage du ressort 1 sur son diamètre extérieur ; sur le pourtour 31 de la cloche 3, sont disposés deux secteurs circulaires 35 et 35₁ pourvus chacun de faces de butées respectivement 37, 38, et 37₁, 38₁, éventuellement pourvus d'éléments amortisseurs respectivement (37', 38'), et (37'₁, 38'₁).
- Un moyeu 5 comportant une collerette 51 pourvue d'une ouverture hexagonale 52 en vue de couplage à l'arbre d'un alternateur et comportant une région cylindrique centrale 53 et une région cylindrique d'extrémité 54 de plus petit diamètre.
- Un palier en deux parties 101, 102 pour assurer la rotation relative entre la jante 4 et le moyeu 5 ; les paliers 101 et 102 sont emmanchés dans la jante 4 pour permettre un guidage en rotation sur la région centrale 53 du moyeu 5.

Le fonctionnement sera maintenant décrit en relation avec les figures 5e et 5f.

Dans une phase où la jante 4 est en accélération par rapport au moyeu 5, l'extrémité 12 du ressort est entraînée à la fermeture par sa face 17 en contact avec la face 47₁ du doigt de butée 42₁, jusqu'à ce que la face 47₁ vienne en butée en 37, 37' dans la position représentée en pointillés.

La rotation de la jante 4 entraîne en même temps le doigt de butée 42₂ qui se dégage du contact entre sa face 47₂ et la face 17' de l'extrémité 14, jusqu'à ce que sa face 48₂ vienne en butée en 38₁ comme représenté en pointillés. On obtient ainsi après un mouvement angulaire d'amplitude α₁ un double effet de butée en 37 et 38₁ avec amortissement éventuel par les éléments 37' et 38'₁.

Dans le cas d'une rotation d'amplitude α₂ du moyeu 5 menant, il se produit un phénomène symétrique.

En effet, la face 47₂ du doigt de butée 42₂ entraîne par sa face 17' l'extrémité 14, jusqu'à ce que la face 47₂ vienne en butée en 38 (dans la position représentée en pointillés). Le doigt de butée 42₁ se trouve alors en butée par sa face 48₁ sur la butée 37₁. Comme précédemment, on bénéficie d'un double effet de butée, avec présence éventuelle d'éléments d'amortissement 38' et 37'₁.

Cette disposition qui pourrait être également mise en oeuvre dans les autres modes de réalisation de l'invention est particulièrement intéressante dans l'application particulière qui est ici envisagée, en raison des efforts importants que transmet une poulie d'alterno-démarreur.

Les figures 6a à 6e représentent des variantes de ressort.

A la figure 6a, les faces 17 et 17' sont positionnées sur le même plan (ou au voisinage l'une de l'autre), ce qui a pour effet de limiter les efforts radiaux résultants sur la cloche 3. Dans ce type de réalisation, les butées 42 n'occupent pas la totalité de la longueur axiale de la cloche 3.

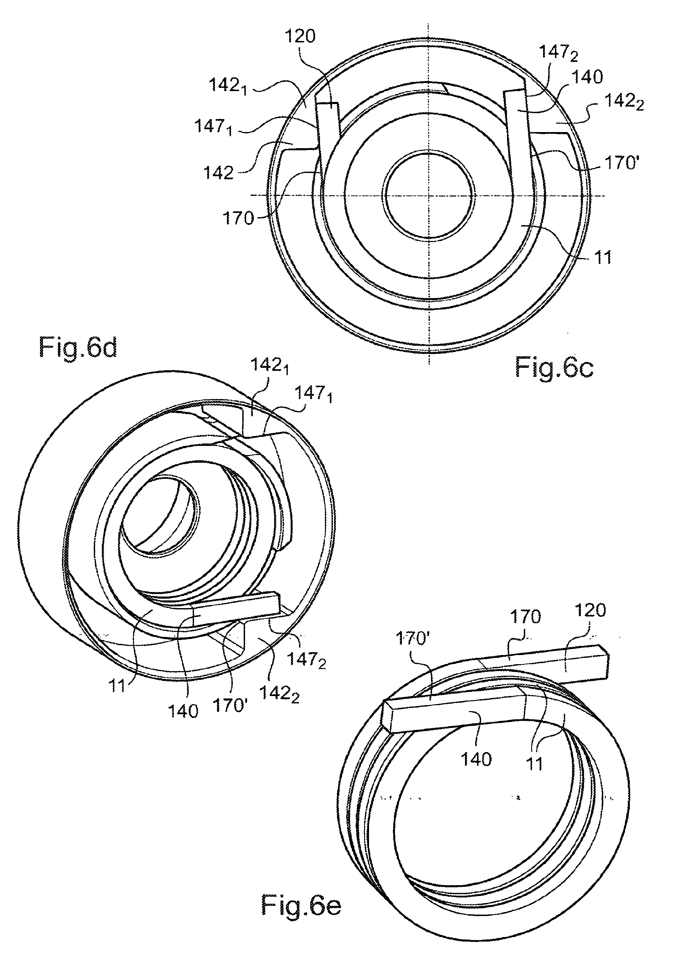

Aux figures 6b à 6d, les extrémités 120 et 140 du ressort 1 sont situées dans le prolongement des spires 11, sans régions recourbées et leur déplacement est commandé à la fermeture par leurs faces 170 et 170' grâce à des doigts de butée 142₁ et 142₂ en forme de coin (figures 6c et 6d) qui présentent des faces planes 147₁ et 147₂ qui s'appuient à plat sur les faces 170 et 170'.

A la figure 6e, les extrémités du ressort 1, situées dans le prolongement des spires ne sont pas ou peu décalées angulairement afin d'avoir un nombre entier de spires.

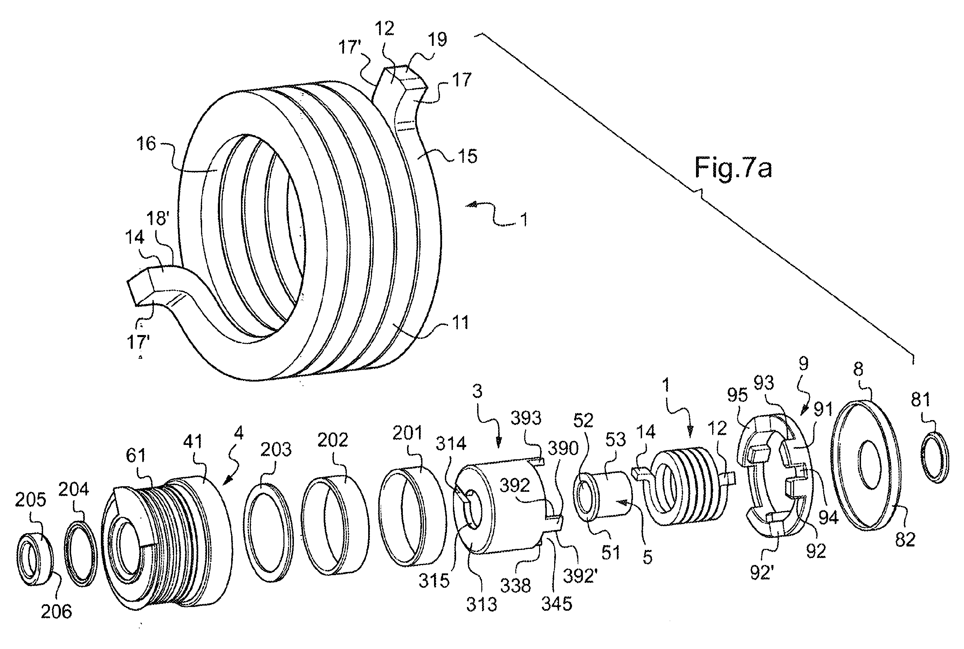

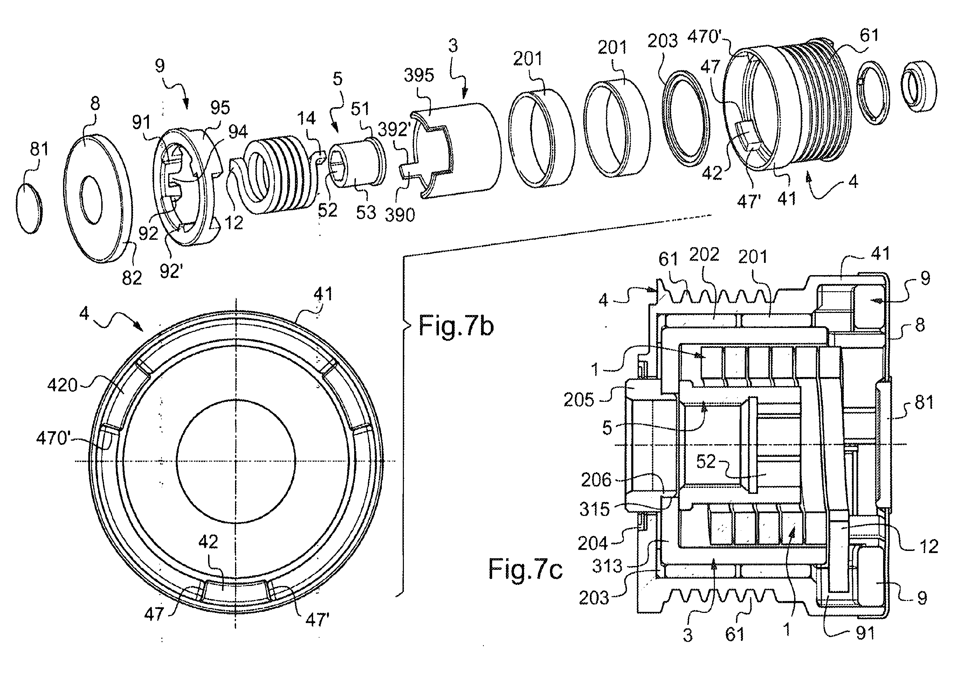

Les figures 7a à 7c sont une variante de l'invention dans laquelle l'extrémité 12 du ressort est logée dans une pièce intermédiaire, à savoir un anneau 9 centré par rapport à la cloche 3 qui a pour fonction de diminuer l'impact des chocs sur l'extrémité 12 du ressort 1 par laquelle celui-ci est entraîné à la fermeture. Cet anneau 9 est ainsi de préférence en un matériau non métallique diminuant le bruit (par exemple polyamide ou polyuréthane) ou bien il présente au moins une face de contact 92, revêtue d'un matériau amortisseur de chocs tel qu'un élastomère ou un matériau thermoplastique élastomérique (TPE). Cet anneau 9 permet notamment de remplir ou de compléter la fonction des éléments élastiques 37' ou 38' précités interposés entre les faces 47 et 48 et les butées respectivement 37 et 38, lesquels peuvent cependant être mis en oeuvre dans la présente variante.

Un moyeu cylindrique 5 pourvu d'une tête 51 et d'une région cylindrique 53, solidaire en rotation de la cloche 3 permet un montage sur un arbre, par exemple d'alternateur, par son ouverture hexagonale 52.

Les repères 201 et 202 désignent des paliers interposés entre la cloche 3 et la jante 4, et 203 une rondelle de friction éventuelle. La jante 4 est par exemple en aluminium ou en matière plastique (polyamide, résine thermodurcissable). Les paliers 201 et 202 peuvent être surmoulés, de même que la rondelle 203. Un joint 204 assure l'étanchéité autour d'une rondelle d'appui 205. La rondelle d'appui 205 présente éventuellement un prolongement 206 de centrage de la cloche 3 dans une ouverture 315 de son fond 313.

Le capot 8 pourvu d'un bouchon 81 vient s'emmancher à son pourtour 82 dans le contour externe 41 de la jante 4.

Le ressort 1 présente une branche axiale 14 logée dans une fente 314 ménagée dans la cloche. La branche radiale 12 qui sert à l'entraînement du ressort 1 à la fermeture est logée dans une fente 94 de l'anneau 9 qui est ménagée dans un secteur annulaire 91 bordé de part et d'autre par une butée 92 qui coopère avec la face 47 de la butée 42 de la jante 4 pour commander le ressort 1 à la fermeture et avec la butée 393 de la cloche 3 pour limiter ensuite le débattement angulaire du ressort 1 à la valeur angulaire α₁. La face 47 de la butée de jante vient ainsi au contact de la butée 92 de l'anneau 9 pour entraîner le ressort en fermeture et α₁ est l'angle compris entre la face 93 de l'anneau 9 et la face 393 de la cloche 3.

La face 470' de la butée de jante 420 vient en contact de la butée 93 de l'anneau 9. α₄ est l'angle parcouru par la face 470' jusqu'à son contact en 93.

Le pourtour de l'anneau 9 et de la cloche 3 peuvent présenter au moins un autre secteur annulaire (95, 395) qui permet de dédoubler les butées servant à définir les angles α₁ et éventuellement α₄.

L'adjonction de l'anneau 9 permet d'éviter les contacts directs entre le ressort 1 et la jante 4 d'une part, et entre le ressort 1 et la cloche 3 d'autre part, contacts qui sont générateurs de bruit par contact métal sur métal. Dans cette variante en effet, tous les contacts dus aux mouvements relatifs entre les pièces ont lieu sur la pièce annulaire 9, les branches (12, 14) du ressort étant logées étroitement sur l'anneau 9 et/ou sur la cloche 3. Dans le cas des variantes mettant en jeu les angles α₂ et/ou α₃, il est possible de mettre en oeuvre un deuxième anneau 9.

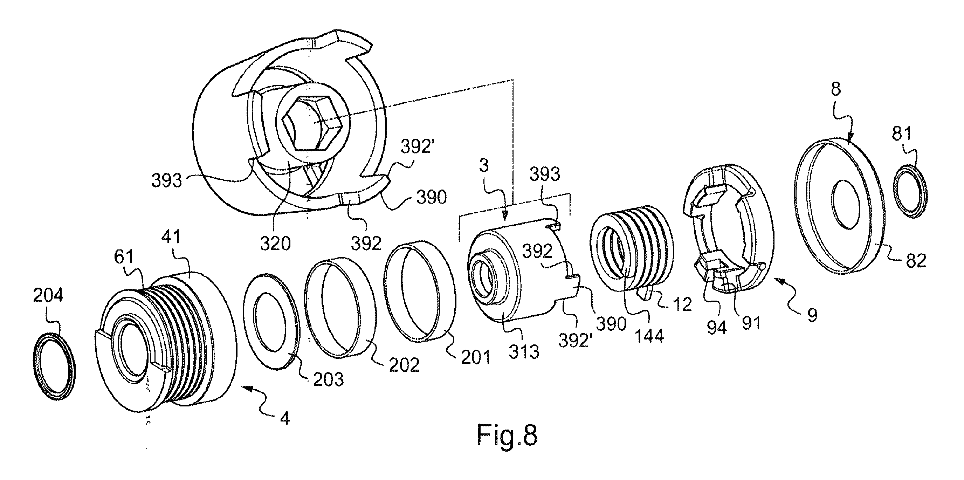

Les figures 8 sont des variantes des figures 7a et 7b dans lesquelles la branche axiale 14 est remplacée par une branche 144 cintrée vers l'intérieur du ressort et qui est reçue dans un logement (rainure d'encastrement 320) de la cloche 3. Cette variante peut être mise en oeuvre également dans le cas des autres modes de réalisation décrits lesquels ne comportent pas d'anneau 9.

## Revendications

1. Poulie de découplage comportant une jante (4) solidaire d'un premier élément de transmission de puissance, ainsi qu'un ressort de torsion (1) monté dans un réceptacle solidaire d'un deuxième élément de transmission de puissance, l'un des éléments de transmission de puissance étant menant et l'autre des éléments de transmission de puissance étant mené, **caractérisée en ce que** le réceptacle est une cloche (3) à l'intérieur de laquelle est centré le ressort, lequel présente une première (12) et une deuxième (14) région d'extrémité dont chacune est en appui sur une face d'appui (32, 34) de la cloche (3), **en ce que** la jante (4) présente au moins une première butée d'entraînement (42) ayant une première face (47) coopérant avec la première région d'extrémité (12) du ressort (1) pour entraîner celui-ci dans le sens de la fermeture dans un premier sens de rotation relatif entre la jante (4) et la cloche (3), et **en ce que** la cloche (3) comporte au moins une première butée de cloche (37, 371, 37', 118) dont la position angulaire définit une première valeur maximale donnée α₁ pour le débattement de la première région d'extrémité (12) du ressort (1) entraîné à la fermeture par ladite première butée d'entraînement (42).

2. Poulie selon la revendication 1, **caractérisée en ce que** seule ladite première région d'extrémité (12) du ressort (1) coopère par ladite première face (47) avec la première butée d'entraînement (42), de sorte que la deuxième région d'extrémité du ressort reste en appui sur sa face d'appui (34).

3. Poulie selon la revendication 2, **caractérisée en ce que**, pour le deuxième sens de rotation relatif entre la jante (4) et la cloche (3) opposé audit premier sens de rotation, le pourtour de la cloche (3) présente un secteur angulaire (45) de rotation à couple constant pour la première butée d'entraînement (42) sur un débattement angulaire α₄ entre la première extrémité du ressort (12) jusqu'à une deuxième butée de cloche (38, 381, 38', 118').

4. Poulie selon la revendication 3, **caractérisée en ce que** la deuxième région d'extrémité (14) de ressort (1) est dégagée du secteur angulaire (45) pour permettre le passage de la première butée d'entraînement (42) jusqu'à ladite deuxième butée de cloche (38, 381, 38', 118').

5. Poulie selon une des revendications 1 à 3, **caractérisée en ce que** la deuxième région d'extrémité (14) du ressort (1) est cintrée vers l'intérieur du ressort (1) et encastrée dans une rainure d'encastrement (320) ménagée dans la cloche (3).

6. Poulie selon la revendication 1, **caractérisée en ce que** ladite première région d'extrémité (12), ainsi que ladite deuxième région d'extrémité (14) coopérent alternativement selon ledit sens de rotation relatif avec ladite première butée d'entraînement (42) pour entraîner le ressort (1) à la fermeture, et **en ce que** la cloche (3) présente une troisième butée de cloche (38, 38') dont la position angulaire définit une deuxième valeur maximale donnée α₂ pour le débattement de la deuxième région d'extrémité (14) du ressort (1) entraîné à la fermeture par une deuxième face (48) de la première butée d'entraînement (42) opposée à la première face (47).

7. Poulie selon la revendication 6, **caractérisée en ce que** la cloche (3) présente un secteur angulaire (45) de rotation libre pour la première butée d'entraînement (42) sur un débattement angulaire α₃ entre la première (12) et la deuxième (14) extrémité du ressort (1).

8. Poulie selon la revendication 1, **caractérisée en ce que** le ressort (1) présente une dite première région d'extrémité (12) coopérant avec ladite première face (47₁) de ladite première butée d'entraînement (42₁) et une dite deuxième région d'extrémité (14) coopérant avec une première face (47₂) d'une deuxième butée d'entraînement (42₂) pour entraîner le ressort (1) dans le sens de la fermeture dans un deuxième sens de rotation opposé au premier sens de rotation, et **en ce que** la cloche (3) présente une dite troisième butée de cloche (38, 38', 381, 118') dont la position angulaire définit une deuxième valeur maximale donnée α₂ pour le débattement de la deuxième région d'extrémité (14) du ressort (1) entraîné à la fermeture par la deuxième butée d'entraînement (14).

9. Poulie selon la revendication 8, **caractérisée en ce que** la cloche présente une quatrième (38₁, 38'₁) et une cinquième (37₁, 37'₁) butées de cloche autorisant respectivement un dit débattement angulaire α₁ pour la deuxième butée d'entraînement (42₂) lorsque la première extrémité (12) du ressort (1) est entraînée à la fermeture par la première face (47₁) de la première butée d'entraînement (42₁) et un dit débattement angulaire α₂ pour la première butée d'entraînement (42₁) lorsque la deuxième extrémité (14) du ressort (1) est entraînée à la fermeture par la première face (47₂) de la deuxième butée d'entraînement (42₂),

10. Poulie selon une des revendications 6 à 9, **caractérisée en ce que** α₁ ≠ α₂.

11. Poulie selon une des revendications 6 à 9, **caractérisée en ce que** α₁ = α₂.

12. Poulie selon une des revendications précédentes, **caractérisée en ce qu'**au moins une dite butée de cloche (37, 38) présente une face coopérant avec une dite face (47, 47₁, 47₂, 48) d'une dite butée d'entraînement (42, 42₁, 42₂) pour définir une dite valeur maximale donnée α₁ et/ou α₂.

13. Poulie selon une des revendications précédentes, **caractérisée en ce qu'**au moins une dite butée de cloche (37, 371, 38, 381, 118) comporte au moins un élément amortisseur (37',37'₁, 38', 38'₁, 118'), par exemple un élément élastique.

14. Poulie selon une des revendications précédentes, **caractérisée en ce qu'**au moins une dite butée de cloche (118, 118') présente une face coopérant avec une dite face (18, 18') d'une région d'extrémité (12, 14) du ressort (1) pour définir une dite valeur maximale donnée α₁ et/ou α₂.

15. Poulie selon une des revendications précédentes, **caractérisée en ce qu'**elle comporte un élément de friction (92, 94) introduisant un couple constant entre le premier et le deuxième éléments de transmission de puissance.

16. Poulie selon une des revendications précédentes, **caractérisée en ce que** la première (12) et/ou la deuxième (14) région d'extrémité est en contact avec ladite face d'appui (32, 34).

17. Poulie selon une des revendications 1 à 15, **caractérisée en ce qu'**elle comporte une pièce annulaire (9) centrée sur la cloche (3) et qui présente un logement (94) qui reçoit la première région d'extrémité (12) du ressort (1), ce logement (94) ayant au moins une face de contact (92), qui est en contact avec la dite face d'appui (392) de la cloche.

18. Poulie selon la revendication 17, **caractérisée en ce que** la pièce annulaire (9) est en un matériau non métallique atténuant les bruits dus aux chocs, tel que le polyamide ou le polyuréthane.

19. Poulie selon la revendication 17, **caractérisée en ce que** la pièce annulaire (9) présente au moins une face de contact revêtue d'un matériau amortisseur de chocs tel qu'un élastomère ou un matériau thermoplastique élastomérique.

20. Poulie selon une des revendications précédentes, **caractérisée en ce qu'**elle est une poulie d'accessoire automobile et **en ce que** le premier élément de transmission de puissance comporte une denture (61) pour recevoir la denture d'une courroie de type K et **en ce que** le deuxième élément de transmission de puissance présente un élément de couplage (52) à un dit accessoire.

21. Poulie selon une des revendications précédentes, **caractérisée en ce qu'**elle est une poulie de vilebrequin et **en ce que** le deuxième élément de transmission comporte un élément de couplage à un vilebrequin, et **en ce que** le premier élément de transmission de puissance comporte une denture (61) pour recevoir la denture d'une courroie de type K.

## Claims

1. A decoupling pulley comprising a rim (4) securely attached to a first power transmission element, and a torsion spring (1) mounted in a receptacle securely attached to a second power transmission element, one of the power transmission elements being driving and the other of the power transmission elements being driven, **characterized in that** the receptacle is a bell (3) inside which is centered the spring, which spring has a first (12) and a second (14) end region, each of which bears on a bearing face (32, 34) of the bell (3), **in that** the rim (4) has at least one first drive abutment (42) having a first face (47) cooperating with the first end region (12) of the spring (1) to drive the latter in the direction of closure in a first relative rotational direction between the rim (4) and the bell (3), and **in that** the bell (3) comprises at least one first bell abutment (37, 371, 37', 118), the angular position of which defines a first given maximum value α₁ for the travel of the first end region (12) of the spring (1) driven to close by said first drive abutment (42).

2. The pulley as claimed in claim 1, **characterized in that** only said first end region (12) of the spring (1) cooperates via said first face (47) with the first drive abutment (42), so that the second end region of the spring bears on its bearing face (34).

3. The pulley as claimed in claim 2, **characterized in that**, for the second relative rotational direction between the rim (4) and the bell (3) opposite said first rotational direction, the periphery of the bell (3) has an angular segment (45) of rotation with constant torque for the first drive abutment (42) over an angular travel α₄ between the first end of the spring (12) and a second bell abutment (38, 381, 38',118').

4. The pulley as claimed in claim 3, **characterized in that** the second end region (14) of the spring (1) is disengaged from the angular segment (45) to allow the passage from the first drive abutment (42) to said second bell abutment (38, 381, 38', 118').

5. The pulley as claimed in one of claims 1 to 3, **characterized in that** the second end region (14) of the spring (1) is bent toward the interior of the spring (1) and countersunk in a countersink groove (320) provided in the bell (3).

6. The pulley as claimed in claim 1, **characterized in that** said first end region (12) and said second end region (14) cooperate alternately according to said relative rotational direction with said first drive abutment (42) to drive the spring (1) to close, and wherein the bell (3) has a third bell abutment (38, 38'), the angular position of which defines a second given maximum value α₂ for the travel of the second end region (14) of the spring (1) driven to close by a second face (48) of the first drive abutment (42) opposite the first face (47).

7. The pulley as claimed in claim 6, **characterized in that** the bell (3) has an angular segment (45) of free rotation for the first drive abutment (42) over an angular travel α₃ between the first (12) and the second (14) end of the spring (1).

8. The pulley as claimed in claim 1, **characterized in that** the spring (1) has one said first end region (12) cooperating with said first face (47₁) of said first drive abutment (42₁) and one said second end region (14) cooperating with a first face (47₂) of a second drive abutment (42₂) to drive the spring (1) in the direction of closure in a second rotational direction opposite to the first rotational direction, and wherein the bell (3) has one said third bell abutment (38, 381, 38', 118'), the angular position of which defines a second given maximum value α₂ for the travel of the second end region (14) of the spring (1) driven to close by the second drive abutment (14).

9. The pulley as claimed in claim 8, **characterized in that** the bell has a fourth (38₁, 38'₁) and a fifth (37₁, 37'₁) bell abutment respectively allowing one said angular travel α₁ for the second drive abutment (42₂) when the first end (12) of the spring (1) is driven to close by the first face (47₁) of the first drive abutment (42₁) and one said angular travel α₂ for the first drive abutment (42₁) when the second end (14) of the spring (1) is driven to close by the first face (47₂) of the second drive abutment (42₂).

10. The pulley as claimed in one of claims 6 to 9, **characterized in that** α₁ ≠ α₂.

11. The pulley as claimed in one of claims 6 to 9, **characterized in that** α₁ = α₂.

12. The pulley as claimed in one of the preceding claims, **characterized in that** at least one said bell abutment (37, 38) has a face cooperating with one said face (47, 47₁, 47₂, 48) of one said drive abutment (42, 42₁, 42₂) to define one said given maximum value α₁ and/or α₂.

13. The pulley as claimed in one of the preceding claims, **characterized in that** at least one said bell abutment (37, 371, 38, 381, 118) comprises at least one damping element (37', 37'₁, 38', 38'₁ 118).

14. The pulley as claimed in one of the preceding claims, **characterized in that** at least one said bell abutment (118, 118') has a face cooperating with one said face (18, 18') of an end region (12, 14) of the spring (1) to define one said given maximum value α₁ and/or α₂.

15. The pulley as claimed in one of the preceding claims, **characterized in that** it includes a friction element (92, 94) introducing a constant torque between the first and the second power transmission elements.

16. The pulley as claimed in one of the preceding claims, **characterized in that** the first (12) and/or the second (14) end region is in contact with said bearing face (32, 34).

17. The pulley as claimed in one of claims 1 to 15, **characterized in that** it includes an annular part (9) centered on the bell (3) and which has a housing (94) which receives the first end region (12) of the spring (1), this housing (94) having at least one contact face (92), which is in contact with said bearing face (392) of the bell.

18. The pulley as claimed in claim 17, **characterized in that** the annular part (9) is made of a non-metallic material attenuating noises due to impacts, such as polyamide or polyurethane.

19. The pulley as claimed in claim 17, **characterized in that** the annular part (9) has at least one contact face coated with an impact-damping material such as an elastomer or an elastomeric thermoplastic material.

20. The pulley as claimed in one of the preceding claims, **characterized in that** it is an automobile accessory pulley and wherein the first power transmission element comprises teeth (61) to receive the teeth of a K-type belt, and **in that** the second power transmission element has a coupling element (52) for coupling to one said accessory.

21. The pulley as claimed in one of the preceding claims, **characterized in that** it is a crankshaft pulley and **in that** the second transmission element comprises a coupling element for coupling to a crankshaft, and **in that** the first power transmission element comprises teeth (61) to receive the teeth of a K-type belt.

## Patentansprüche

1. Entkopplungsriemenscheibe, die eine Felge (4), die mit einem ersten Energieübertragungselement fest verbunden ist, sowie eine Torsionsfeder (1) aufweist, die in einer Aufnahmeeinrichtung montiert ist, die mit einem zweiten Energieübertragungselement fest verbunden ist, wobei eines der Energieübertragungselemente treibend und das andere der Energieübertragungselemente getrieben ist, **dadurch gekennzeichnet, dass** die Aufnahmeeinrichtung (3) eine Glocke ist, im Inneren von der die Feder zentriert ist, wobei diese einen ersten Endbereich (12) und einen zweiten Endbereich (14) aufweist, von denen sich jeder auf eine Abstützfläche (32, 34) der Glocke (3) stützt, dass die Felge (4) zumindest einen ersten Antriebsanschlag (42) aufweist, der eine erste Fläche (47) hat, die mit dem ersten Endbereich (12) der Feder (1) zusammenwirkt, um diese in Schließrichtung in eine erste Relativrotationsrichtung zwischen der Felge (4) und der Glocke (3) anzutreiben, und dass die Glocke (3) zumindest einen ersten Glockenanschlag (37, 371, 37', 118) aufweist, dessen Winkelposition einen ersten gegebenen Maximalwert α₁ für den Freiraum des ersten Endbereiches (12) der Feder (1) definiert, der durch den ersten Antriebsanschlag (42) zum Schließen angetrieben wird.

2. Riemenscheibe nach Anspruch 1, **dadurch gekennzeichnet, dass** nur der erste Endbereich (12) der Feder (1) durch die erste Fläche (47) mit dem ersten Antriebsanschlag (42) in der Weise zusammenwirkt, dass der zweite Endbereich der Feder an der Abstützfläche (34) abgestützt bleibt.

3. Riemenscheibe nach Anspruch 2, **dadurch gekennzeichnet, dass** für die zweite Relativrotationsrichtung zwischen der Felge (4) und der Glocke (3), die zur ersten Rotationsrichtung entgegengesetzt ist, der Umfang der Glocke (3) einen Rotationswinkelsektor (45) mit konstantem Moment für den ersten Antriebsanschlag (42) auf einem zweiten Winkelfreiraum α₄ zwischen dem ersten Ende (12) der Feder bis zum zweiten Glockenanschlag (38, 381, 38', 188') aufweist:

4. Riemenscheibe nach Anspruch 3, **dadurch gekennzeichnet, dass** der zweite Endbereich (14) der Feder (1) von dem Winkelsektor (45) freigegeben ist, um das Passieren des ersten Antriebsanschlags (42) bis zum zweiten Glockenanschlag (38, 381, 38', 118') zu gestatten.

5. Riemenscheibe nach einem der Ansprüche 1 bis 3, **dadurch gekennzeichnet, dass** der zweite Endbereich (14) der Feder (1) zum Inneren der Feder (1) hin gekrümmt ist und in eine Einpassnut (320), die in der Glocke (3) vorgesehen ist, eingepasst ist.

6. Riemenscheibe nach Anspruch 1, **dadurch gekennzeichnet, dass** der erste Endbereich (12) sowie der zweite Endbereich (14) alternierend entsprechend der Relativrotationsrichtung mit dem ersten Antriebsanschlag (42) zusammenwirken, um die Feder (1) zum Schließen anzutreiben, und dass die Glocke (3) einen dritten Glockenanschlag (38, 38') aufweist, dessen Winkelposition einen zweiten gegebenen Maximalwert α₂ für den Freiraum des zweiten Endbereiches (14) der Feder (1) aufweist, der durch eine zweite Fläche (48) des ersten Antriebsanschlags (42), die zur ersten Fläche (47) entgegengesetzt ist, zum Schließen angetrieben wird.

7. Riemenscheibe nach Anspruch 6, **dadurch gekennzeichnet, dass** die Glocke (3) einen Winkelsektor (45) zur freien Rotation für den ersten Antriebsanschlag (42) auf einem Winkelfreiraum α₃ zwischen dem ersten Ende (12) und dem zweiten Ende (14) der Feder (1) aufweist.

8. Riemenscheibe nach Anspruch 1, **dadurch gekennzeichnet, dass** die Feder (1) einen ersten Endbereich (12), der mit der ersten Fläche (47₁) des ersten Antriebsanschlags (42₁) zusammenwirkt, und einen zweiten Endbereich (14) aufweist, der mit der ersten Fläche (47₂) eines zweiten Antriebsanschlags (42₂) zusammenwirkt, um die Feder (1) in Schließrichtung in eine zweite Rotationsrichtung, die zur ersten Rotationsrichtung entgegengesetzt ist, anzutreiben, und dass die Glocke (3) einen dritten Glockenanschlag (38, 38', 381, 118') aufweist, dessen Winkelposition einen zweiten gegebenen Maximalwert α₂ für den Freiraum des zweiten Endbereiches (14) der Feder (1), der durch den zweiten Antriebsanschlag (14) zum Schließen angetrieben wird, definiert.

9. Riemenscheibe nach Anspruch 8, **dadurch gekennzeichnet, dass** die Glocke einen vierten Glockenanschlag (38₁, 38'₁) und einen fünften Glockenanschlag (37₁, 37'₁) aufweist, die jeweils einen Winkelfreiraum α₁ für den zweiten Antriebsanschlag (42₂), wenn das erste Ende (12) der Feder (1) zum Schließen durch die erste Fläche (47₁) des ersten Antriebsanschlags (42₁) angetrieben wird, und einen Winkelfreiraum α₂ für den ersten Antriebsanschlag (42₁), wenn das zweite Ende (14) der Feder (1) zum Schließen durch die erste Fläche (47₂) des zweiten Antriebsendes (42₂) angetrieben wird, erlaubt.

10. Riemenscheibe nach einem der Ansprüche 6 bis 9, **dadurch gekennzeichnet, dass** α₁≠α₂ ist.

11. Riemenscheibe nach einem der Ansprüche 6 bis 9, **dadurch gekennzeichnet, dass** α₁=α₂ ist.

12. Riemenscheibe nach einem der vorhergehenden Ansprüche, **dadurch gekennzeichnet, dass** zumindest ein Glockenanschlag (37, 38) eine Fläche aufweist, die mit der Fläche (47, 47₁, 47₂, 48) eines Antriebsanschlags (42, 42₁, 42₂) zusammenwirkt, um einen genannten gegebenen Maximalwert α₁ und/oder α₂ zu definieren.

13. Riemenscheibe nach einem der vorhergehenden Ansprüche, **dadurch gekennzeichnet, dass** zumindest ein Glockenanschlag (37, 371, 38, 381, 118) zumindest ein Dämpfungselement (37', 37'₁, 38', 38'₁, 118'), beispielsweise ein elastisches Element, aufweist.

14. Riemenscheibe nach einem der vorhergehenden Ansprüche, **dadurch gekennzeichnet, dass** zumindest ein Glockenanschlag (118, 118') eine Fläche aufweist, die mit einer genannten Fläche (18, 18') eines Endbereiches (12, 14) der Feder (1) zusammenwirkt, um einen genannten gegebenen Maximalwert α₁ und/oder α₂ zu definieren.

15. Riemenscheibe nach einem der vorhergehenden Ansprüche, **dadurch gekennzeichnet, dass** diese ein Reibelement (92, 94) aufweist, das ein konstantes Moment zwischen das erste und zweite Energieübertragungselement einführt.

16. Riemenscheibe nach einem der vorhergehenden Ansprüche, **dadurch gekennzeichnet, dass** der erste Endbereich (12) und/oder der zweite Endbereich (14) mit der Abstützfläche (32, 34) in Kontakt ist/sind.

17. Riemenscheibe nach einem der Ansprüche 1 bis 15, **dadurch gekennzeichnet, dass** diese ein ringförmiges Stück (9) aufweist, das auf der Glocke (3) zentriert ist und das eine Aufnahme (94) darstellt, die den ersten Endbereich (12) der Feder (1) aufnimmt, wobei diese Aufnahme (94) zumindest eine Kontaktfläche (92) hat, die mit der genannten Abstützfläche (392) der Glocke in Kontakt ist.

18. Riemenscheibe nach Anspruch 17, **dadurch gekennzeichnet, dass** das ringförmige Stück (9) aus einem nichtmetallischem Material ist, das die Geräusche aufgrund der Stöße abschwächt, wie z.B. Polyamid oder Polyurethan.

19. Riemenscheibe nach Anspruch 17, **dadurch gekennzeichnet, dass** das ringförmige Stück (9) zumindest eine Kontaktfläche aufweist, die mit einem Stoßdämpfungsmaterial überzogen ist, wie z.B. Elastomer oder einem thermoplastischen Elastomermaterial.

20. Riemenscheibe nach einem der vorhergehenden Ansprüche, **dadurch gekennzeichnet, dass** diese eine Kraftfahrzeug-Zubehör-Riemenscheibe ist und dass das erste Energieübertragungselement eine Verzahnung (61) aufweist, um die Verzahnung eines Riemens vom Typ K aufzunehmen, und dass das zweite Energieübertragungselement ein Element (52) zum Koppeln mit dem genannten Zubehör aufweist.

21. Riemenscheibe nach einem der vorhergehenden Ansprüche, **dadurch gekennzeichnet, dass** diese eine Kurbelwellenriemenscheibe ist und dass das zweite Übertragungselement ein Element zum Koppeln mit einer Kurbelwelle aufweist und dass das erste Energieübertragungselement eine Verzahnung (61) zum Aufnehmen der Verzahnung eines Riemens vom Typ K aufweist.
